# EUROPEAN PATENT APPLICATION

(11) **EP 1 522 228 A1**
(43) Date of publication of application: **13.04.2005**
(21) Application number: 04023289.4
(22) Date of filing: 30.09.2004
(51) Int. Cl.: A43B 19/00, A43B 23/07, A43B 7/12, C09J 7/00, B32B 27/04

(54) **Sock-shaped footwear lining, and footwear incorporating said lining**

(30) Priority: 10.10.2003 IT PC20030042
(71) Applicant: FRAMIS ITALIA S.P.A., 20083 Vigano di Gaggiano (Milano) (IT)
(72) Inventor: Salotto, Luciano, 20129 Milano (IT)
(74) Representative: La Ciura, Salvatore

(57) **Abstract**

This invention relates to a sock designed to act as a footwear lining, and footwear incorporating said sock.

The sock according to the invention consists of two or more layers, in particular three layers, of elastic material, the edges of which are joined without stitching, in particular with adhesive tape.

These characteristics produce a sock which perfectly adapts to the shape of the foot and the footwear, which has good waterproofing characteristics and which, due to the absence of stitching, has no areas which may be uncomfortable or scratch the foot.

## Description

This invention relates to a sock designed to act as a footwear lining, and footwear incorporating said sock.

The sock according to the invention consists of two or more layers, in particular three layers, of elastic material, the edges of which are joined without stitching, in particular with adhesive tape.

These characteristics produce a sock which perfectly adapts to the shape of the foot and the footwear, which has good waterproofing characteristics and which, due to the absence of stitching, has no areas which may be uncomfortable or scratch the foot.

Different types of footwear linings are known which constitute an effective barrier to liquids, while still allowing the foot to breathe to a certain extent.

Patent WO 00/22948 in the name of Nextec describes a process for waterproofing leather, which involves causing at least one semi-permeable membrane to adhere to the inner surface of the leather by pressure, the surface of said membrane which comes into contact with the leather being coated with a layer of glue spread in a particular pattern.

Patent WO 01/30190 in the name of Gore illustrates a lining designed to be applied to the inner surface of footwear; said lining comprises a layer of waterproof material which is designed to be attached to the upper and follows its shape, and is connected to the lining layer of the sole at the lower edge.

Patent USA 4,599,810 describes a footwear lining that comprises at least one layer which is made of breathable waterproof material applied to the inner surface of the upper, and follows its shape. Said patent also addresses the problem of the stitching in the membrane used to make the coating because, as stated in the text, water can seep through the holes of the stitches and penetrate into the shoe.

This problem is solved by the above-mentioned US patent 4,599,810 by applying waterproof adhesive tape over the stitching.

However, that patent neither addresses nor solves the problem of skin discomfort sometimes caused by stitching.

Known solutions include the use of an inner sock, which is glued to the surface of the upper and the sole, which said inner sock has a waterproof layer (made of Gore-tex® or fluorocarbon and/or polyurethane) and is stitched at the join areas, the stitching being concealed by adhesive tape.

This solution creates problems, however, because the tape and the stitching tend to crease during use at the points where the thickness is greatest due to the overlap of the stitched edges, and the stitching tends to break or the tape becomes detached at the creases, eventually allowing water to seep in; in any event, these creases at the stitching cause discomfort to the user's skin.

Moreover, the waterproof layer of this type of footwear is non-stretch, so the sock must perfectly follow the entire inner surface of the upper, including the "tongue" area (namely the area where the shoe opens so that it can be put on), which has a leather protective layer, and this entails other drawbacks in terms of creasing and premature delamination.

In addition, the edges of the fabric to be stitched must overlap slightly, thus creating along the stitching line a channel (of the same size as the thickness of the fabric) through which water may seep.

Said problems are now solved by this invention, which relates to a sock designed to act as a footwear lining, having an intermediate layer of waterproof material bonded to an outer protective layer, and an inner layer of hydrophilic material.

The sock according to the invention has no stitching; the edges are simply juxtaposed and joined with adhesive tape which also has characteristics of elasticity.

The result is a sock which perfectly adapts to the shape of both the foot and the footwear, offers greater comfort, because it absorbs the moisture deriving from perspiration more effectively due to the hydrophilic properties of the inner layer, and does not present the same problems as known linings at the creases in view of the absence of stitching.

This invention will now be described in detail, by way of example but not of limitation, by reference to the annexed drawings wherein:
- figure 1 schematically illustrates the layer of material with which the sock according to the invention is made;
- figure 2 schematically illustrates a sock according to the invention;
- figure 3 shows a cross-section of the layer of material used to make the sock, at a point where its edges are joined.

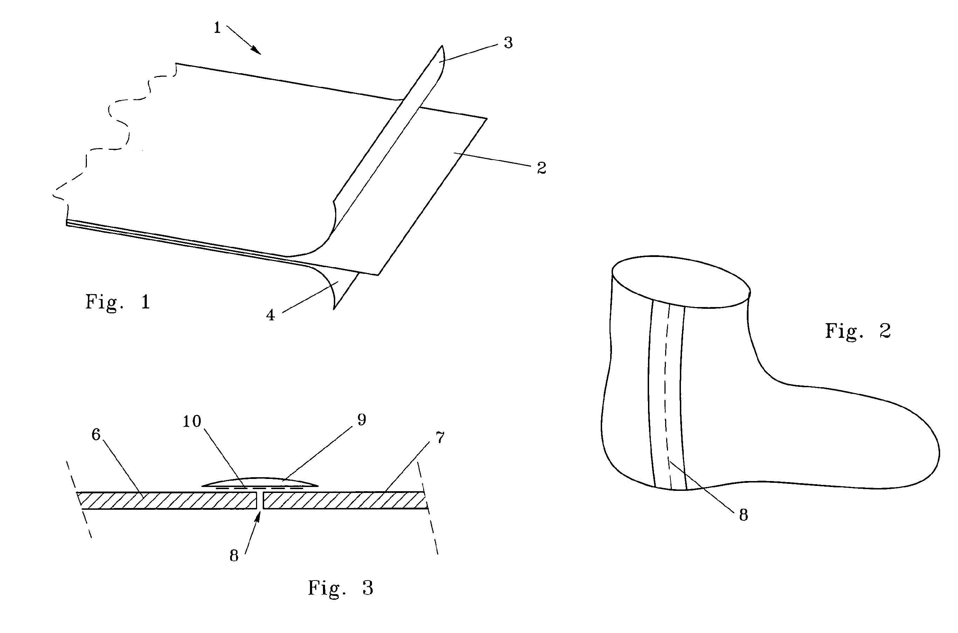

The sock according to the invention, illustrated schematically in figure 2, is made of a material constituted by three layers (see figure 1), comprising an intermediate layer constituted by a polyurethane membrane 2, which is elastic and has waterproof characteristics, which said intermediate layer is bonded to an outer layer 3 constituted by a protective jersey fabric preferably made of polyester or polyamide, and to a lining 4 made of hydrophilic material which ensures sufficient comfort for the user, and which may be, for example, a jersey fabric made of wool, cotton, polyester, nylon or the like.

Other materials may also be used, provided that they possess the characteristics set out above; in particular, the intermediate layer must have characteristics of elasticity, and the outer layers must be able to follow the deformations and elongations of the intermediate layer, so as to produce an elastic sock that adapts to the shape of the foot.

The elasticity characteristics of the sock mean that it adapts to the shape of the foot and clings to the foot, not the upper, following the movements of the foot but always ensuring that the fabric remains slightly taut, thus preventing the formation of creases or lumps which could be uncomfortable.

The intermediate layer prevents water or moisture from penetrating inside the sock, while the inner layer made of hydrophilic material absorbs the moisture produced by perspiration, thus ensuring the user's comfort, partly due to the fact that the elasticity of the material causes the sock to cling to the foot.

As a result of the elasticity of the sock, it is not necessary for the sock to adhere to the upper and sole as in the case of known footwear; it is sufficient for it to be secured thereto at a few points, such as at the front and rear.

In accordance with a further characteristic of the invention, the layers of material used to make the sock are joined with adhesive tape, thereby eliminating all stitching.

More in particular, as schematically illustrated in figure 3, edges 6 and 7, which are perfectly trimmed, are brought together until they touch and joined by applying adhesive tape 9, made, for example, of polyurethane, with a layer of hot glue 10.

The fabric can be trimmed by known techniques, and then joined edge-to-edge without any overlap, ready for application of the tape.

This eliminates the need for stitching and the corresponding holes, and does not create gaps through which water can seep.

The result is a particularly comfortable sock, which prevents seepage of water from the outside to the inside and efficiently absorbs the moisture created by perspiration, clings perfectly to the foot, and can be applied easily to footwear, with no need for complex operations which would increase its cost.

An expert in the field could devise various modifications and variations, all of which should be deemed to fall within the ambit of this invention.

## Claims

1. Sock designed to replace a footwear lining, **characterised in that** it consists of two or more layers of material wherein at least one of said layers (2) is elastic and the other layers are bonded to said elastic layer so as to follow its deformations.

2. Sock designed to replace a footwear lining as claimed in claim 1, **characterised in that** it consists of a membrane (2) made of elastic material with waterproofing characteristics, bonded to a lining (4) made of a material suitable to increase the user's comfort, and to an outer protective layer (3).

3. Sock designed to replace a footwear lining as claimed in claim 2, **characterised in that** it consists of an intermediate layer (2) made of waterproofing material, an inner layer (4) made of hydrophilic material designed to absorb the moisture produced by perspiration, and an outer protective layer (3).

4. Sock designed to replace a footwear lining as claimed in claim 3, wherein said inner layer (4) is constituted by a hydrophilic fabric.

5. Sock designed to replace a footwear lining as claimed in claim 3, **characterised in that** the outer layer (3) is made of polyester or polyamide.

6. Sock designed to replace a footwear lining as claimed in any of the preceding claims, **characterised in that** the edges (6, 7) are joined without stitching at the join areas.

7. Sock designed to replace a footwear lining as claimed in claim 6, **characterised in that** the edges are joined with adhesive tape (9).

8. Sock designed to replace a footwear lining as claimed in claim 7, **characterised in that** said adhesive tape (9) is the polyurethane type, with hot polyurethane glue (10).

9. Footwear **characterised in that** it includes a sock as claimed in any of the preceding claims.

10. Process for the manufacture of a sock as claimed in any of the preceding claims, **characterised in that**:
• the layer of material used is trimmed;
• the edges of said layer of material are joined by laying them end to end;
adhesive tape is applied at the join areas of said layer.
